# EUROPÄISCHE PATENTSCHRIFT

(11) **EP 0 344 412 B1**
(45) Veröffentlichungstag und Bekanntmachung des Hinweises auf die Patenterteilung: **05.05.1993**
(21) Anmeldenummer: 89104095.8
(22) Anmeldetag: 08.03.1989
(51) Int. Cl.: E21B 47/022, E21B 7/26, E21B 7/06, G01C 5/04

(54) **Verfahren und Messvorrichtung zum laufenden Messen der relativen Höhenlage eines in das Erdreich einzutreibenden Langkörpers**
Process and device for the continuous measuring of the relative height of a long object driven into the earth
Procédé et dispositif pour la mésure continue de la hauteur relative d'un objet allongé à enfoncer dans la terre

(30) Priorität: 28.05.1988 DE 3818232
(43) Veröffentlichungstag der Anmeldung: 06.12.1989
(73) Patentinhaber: Schmidt, Paul, D-57368 Lennestadt (DE)
(72) Erfinder: Hesse, Alfons, D-5940 Lennestadt 11 (DE)
(74) Vertreter: König, Reimar, Dr.-Ing.

(56) Entgegenhaltungen:
- WO-A-87/03924
- DE-A- 2 947 049
- US-A- 3 970 157
- US-A- 4 218 919
- US-A- 4 356 639
- US-A- 4 621 698
- US-A- 4 646 277
- PATENT ABSTRACTS OF JAPAN, Band 7, Nr. 160 (P-210)[1305], 14. Juli 1983; & JP-A-58 68 610 (KOMATSU SEISAKUSHO K.K.) 23-04-1983

## Beschreibung

Die Erfindung betrifft ein Verfahren und ein Erdverdrängungsgerät, wie ein Rammbohrgerät oder ein Vortriebsrohr, mit einer Meßvorrichtung zum laufenden Messen der relativen Höhenlage des Erdverdrängungsgerätes während des Vortriebs im Erdreich.

Das Herstellen von Bohrungen im Erdreich mit Hilfe eines Rammbohrgerätes oder das Eintreiben von Rohren ins Erdreich mit Hilfe eines Rammbohrgerätes ist bekannt. Es lassen sich auf diese Weise grabenlos Straßen, Gebäude oder andere Bauten oder Hindernisse unterfahren. Bisher war es jedoch mit einfachen Mitteln nicht möglich, den Verlauf einer so hergestellten Bohrung oder eines in das Erdreich vordringenden Rohres während des Vortriebs zu kontrollieren, Abweichungen festzustellen und zu korrigieren. Zwar sind aus der deutschen Offenlegungsschrift 22 42 605 winkeleinstellbare Leitvorrichtungen an Rammbohrgeräten bekannt, um einer Erdbohrung einen bogenförmigen Verlauf zu geben, jedoch lassen sich diese Leitvorrichtungen nur außerhalb der Bohrung und vor dem Start des Rammbohrgerätes einstellen. Außerdem erfordern diese Leitvorrichtungen ein winkelgenaues Ausrichten des Rammbohrgerätes auf einer Startlafette; sie lassen sich während des Vortriebs nicht steuern. Jedoch müssen zum Beispiel unter Straßen verlaufende Bohrungen oder verlegte Rohre einer besonders genauen, vorgegebenen Richtung folgen, um ein Auftreffen auf unter der Straße bzw. im Erdreich verlegte Kabel, Wasserleitungs- oder Kanalisationsrohre zu vermeiden.

Auf einem vom Anmeldungsgegenstand entfernten Gebiet der Technik ist aus der US-A-4 218 919 ein Meßkopf bekannt, der sich durch bereits im Erdreich verlegtes Rohr mittels eines vorne am Meßkopf befestigten Seiles hindurchziehen läßt. Der einen Meßwertumformer aufweisende Meßkopf ist über einen Schlauch, der eine mit Flüssigkeit gefüllte Leitung aufnimmt, mit dem von der Rohrleitung entfernten Schlauchende mit einem Flüssigkeitsbehälter verbunden. Mit dem Flüssigkeitsbehälter ist ein zweiter Meßwertumformer verbunden, der einen Referenzwert für den ersten Meßwertumformer liefert. Somit läßt sich bei Niveau-Abweichungen der bereits verlegten Rohrleitung aufgrund des sich verändernden hydrostatischen Druckes die Höhendifferenz ermitteln und auswerten. Dieser Stand der Technik geht somit nicht über das seit langem bekannte Schlauchwaagen-Meßprinzip zum Ermitteln von Höhendifferenzen zweier Punkte hinaus.

Der Erfindung liegt die Aufgabe zugrunde, ein einfaches Verfahren und ein Erdverdrängungsgerät, wie ein in das Erdreich eindringendes Rammbohrgerät oder ein Rohr, zu schaffen, die es erlauben, den Verlauf einer Erdbohrung oder eines Rohres während des Vortriebes zu kontrollieren sowie Abweichungen festzustellen und zu korrigieren.

Diese Aufgabe wird bei einem Verfahren der eingangs erwähnten Art mit den im Anspruch 1 enthaltenen Merkmalen gelöst. Damit läßt sich erreichen, daß sich Höhenabweichungen eines Rammbohrgerätes im Erdreich oder eines in das Erdreich eingetriebenen Rohres mittels hydrostatischer Druckunterschiede laufend kontrollieren lassen, so daß während des gesamten Vortriebsweges eine exakte Höhenkontrolle möglich ist.

Bei einem Erdverdrängungsgerät mit einer Meßvorrichtung zur Durchführung des Verfahrens ist das hintere, oberhalb des Erdverdrängungsgerätes angeordnete Ende des Schlauchs mit einem Druckaufnehmer verbunden und weist das vordere, vorne mit dem Erdverdrängungsgerät verbundene Ende des Schlauchs eine gekapselte Ausgleichsmembran auf, die Volumenveränderungen der Flüssigkeit und des Schlauchs aufgrund von Temperaturschwankungen ausgleicht und für ein geschlossenes Meßsystem sorgt, bei dem am Druckaufnehmer statische Druckunterschiede auftreten, die ein Maß für die relative Höhenlage des Erdverdrängungsgerätes bezogen auf die Waagerechte sind. Eine alternative Ausführung eines Erdverdrängungsgerätes sieht vor, daß der Schlauch selbst als ein eine Drucksäule zur Verfügung stellender Vorratsbehälter dient; in diesem Fall kann der Flüssigkeitsbehälter entfallen.

Das Erdverdrängungsgerät besitzt vorteilhaft einen mit dem die bei relativen Höhenabweichungen des Erdverdrängungsgerätes bewirkten statischen Druckveränderungen ermittelnden Druckaufnehmer verbundenen Meßumformer, der mit einem Anzeige- und Registriergerät oberhalb des Erdverdrängungsgerätes angeordnet ist und den sich ändernden Druck in elektrische, eine direkte Anzeige von Höhenabweichungen im Registriergerät erlaubende Signale umwandelt. Da der mit Flüssigkeit gefüllte Schlauch mit dem Erdverdrängungsgerät im Erdreich mitwandert, ergibt sich bei jeder Veränderung der relativen Höhenlage des Erdverdrängungsgerätes bezogen auf die Waagerechte eine entsprechende Veränderung der Höhe der den statischen Druck bestimmenden Flüssigkeitssäule im Schlauch, die unmittelbar ein Maß für die relative Höhenlage des Erdverdrängungsgerätes ist. Es genügt daher, das mit dem statischen Druck beaufschlagte Registriergerät in Metern oder Bruchteilen davon zu eichen, um eine direkte Anzeige der relativen Höhenlage zu erhalten. Mittels des Registrier- und Anzeigegerätes lassen sich von dem elektronischen Druckaufnehmer großer Empfindlichkeit Augenblickswerte sowohl anzeigen als auch registrieren und somit auch im nachhinein auswerten.

Sofern die Meßvorrichtung des Erdverdrängungsgerätes die gekapselte Ausgleichsmembran aufweist, liegt ein geschlossenes System vor, bei dem am Druckaufnehmer ein mehr oder weniger großer Unterdruck auftritt, der ein Maß für die relative Höhenlage ist. Die Membran gleicht Volumenveränderungen der Flüssigkeit und des Schlauchs aufgrund von Temperaturschwankungen aus.

Wird ein offenes System verwendet, bei dem das außerhalb und oberhalb des Erdverdrängungsgerätes bzw. der Erdbohrung angeordnete Ende des Schlauchs mit einem Flüssigkeitsvorratsbehälter verbunden ist, der die durch Temperaturschwankungen bedingten Volumenveränderungen der Flüssigkeit und des Schlauchs ausgleicht, befindet sich der Druckaufnehmer am vorderen, vorne mit dem einzurammenden Rohr bzw. mit dem Rammbohrgerät verbundenen Ende des Schlauchs; es führt dann eine Signalleitung vom Druckaufnehmer zum Meßwertumformer.

Das erfindungsgemäße Verfahren läßt sich vorteilhaft in Verbindung mit einem in Form eines Rammbohrgerätes mit einer Meßvorrichtung zum laufenden Messen der relativen Höhenlage während des Vortriebs in das Erdreich eingesetzten Erdverdrängungsgerätes zum Herstellen von im wesentlichen waagerechten Erdbohrungen verwenden, um den Lauf des Rammbohrgerätes und der Erdbohrung entsprechend der gemessenen relativen Höhenlage zu steuern. Zu diesem Zweck weist das Rammbohrgerät einen mit einer Flüssigkeit gefüllten Schlauch auf, dessen vorderes Ende mit dem Rammbohrgerät verbunden und dessen hinteres Ende außerhalb und oberhalb der Erdbohrung angeordnet und mit einem Druckaufnehmer versehen ist, wobei sich bei auf die Waagerechte bezogenen relativen Höhenabweichungen des Rammbohrgerätes während des Vortriebs der auf den Druckaufnehmer wirkende statische Druck verändert und direkt ein Maß für die relative Höhenlage der beiden Schlauchenden zueinander darstellt, und weist weiterhin einen mit dem Druckaufnehmer verbundenen Meßwertumformer, der den sich ändernden statischen Druck in elektrische, eine direkte Anzeige von Höhenabweichungen des Rammbohrgerätes in einem oberhalb des Rammbohrgerätes angeordneten Anzeige-und Registriergerät erlaubende Signale umwandelt, sowie einen mit dem Schlauch verbundenen, die Länge des in die Erdbohrung gezogenen Schlauchs und damit die von dem Rammbohrgerät zurückgelegte Wegstrecke ermittelnden Wegaufnehmer und eine mit dem Meßwertumformer und dem Wegaufnehmer verbundene, im Rammbohrgerät angeordnete Steuervorrichtung für die Winkellage des Rammbohrgerätes auf.

Mit einer vorteilhaft mit der Steuervorrichtung verbundenen, einen vorgegebenen Bohrungsverlauf speichernden Programmeinheit läßt sich eine gewünschte Laufrichtung mit Hilfe der Meßvorrichtung während des Vortriebs überwachen, kontrollieren und damit einhalten.

Die Erfindung wird nachstehend anhand zweier in der Zeichnung dargestellter Ausführungsbeispiele des näheren erläutert. Es zeigen:

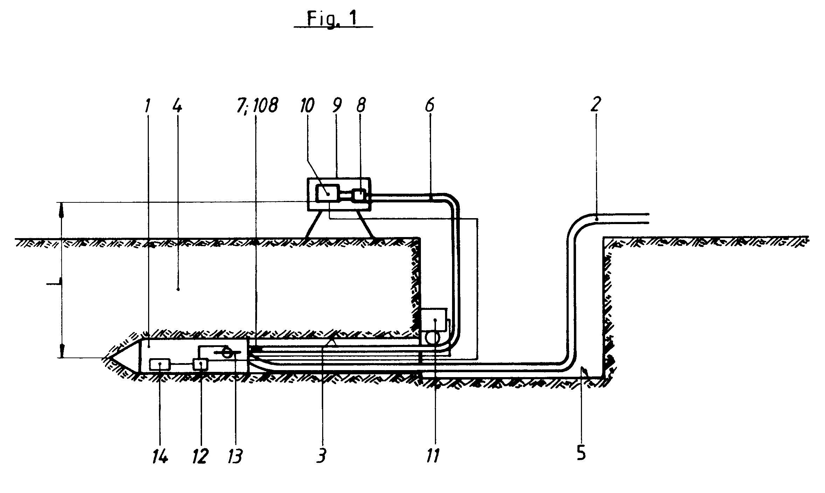

- Fig. 1: ein Rammbohrgerät, das mit einer erfindungsgemäßen Meßvorrichtung verbunden ist, und
- Fig. 2: ein von einer Ramme in das Erdreich getriebenes Rohr, das mit einer Meßvorrichtung verbunden ist.

Ein Rammbohrgerät 1, das in seinem Gehäuse einen pneumatisch angetriebenen, umzusteuernden Schlagkolben aufweist, ist mit einem zu einem nicht dargestellten Verdichter geführten Druckluftschlauch 2 verbunden. Das Rammbohrgerät 1 stellt eine Bohrung 3 im Erdreich 4 her und wird dazu aus einer Grube 5 gestartet, von deren Sohle aus das Rammbohrgerät 1 im wesentlichen waagerecht in das Erdreich 4 eindringt, dieses zur Seite drängt und verdichtet, so daß die Bohrung 3 entsteht.

Mit dem hinteren Ende des Rammbohrgerätes 1 ist das vordere Ende eines mit Flüssigkeit gefüllten Schlauchs 6 verbunden. Dieses Ende weist eine gekapselte Ausgleichsmembran 7 auf, während das verschlossene, hintere Ende des Schlauchs 6 mit einem außerhalb und oberhalb der Bohrung 3, vorzugsweise außerhalb der Grube 5 angeordneten Druckaufnehmer 8 verbunden ist. Wenn sich die relative Höhenlage des Rammbohrgerätes 1 und damit der Bohrung im Verhältnis zum Druckaufnehmer 8 ändert, ändert sich auch der auf den Druckaufnehmer 8 wirkende statische Druck - hier als Unterdruck - und stellt direkt ein Maß für die relative Höhenlage der beiden Schlauchenden zueinander dar. Der statische Druck wird in einem Anzeige- und Registriergerät 9 angezeigt und registriert, nachdem die Werte aus dem Druckaufnehmer 8 zuvor in einem Meßwertumformer 10 entsprechend umgeformt wurden.

Der Schlauch 6 folgt dem Rammbohrgerät 1 bis zum Ende der Bohrung 3; er kann zu diesem Zweck auf einer beispielsweise in der Grube 5 angeordneten, jedoch nicht dargestellten Trommel aufgewickelt sein.

Um mittels der Meßwerte direkt den Lauf des Rammbohrgerätes 1 und damit den Bohrungsverlauf zu korrigieren, ist mit dem Schlauch 6 ein Wegaufnehmer 11 verbunden, der die Länge des in die Bohrung 3 gezogenen Schlauchs 6 mißt. Im Rammbohrgerät 1 ist eine Steuervorrichtung 12 angeordnet, die mit dem Meßwertumformer 10 und den Wegaufnehmer 11 verbunden ist und Steuersignale für eine Leitvorrichtung 13 erzeugt. Diese Leitvorrichtung kann aus verstellbaren Leitflügeln bestehen, so daß sich mittels der Steuervorrichtung 12 eine Korrektur erreichen läßt, da die Leitvorrichtung 13 wie das Höhenruder eines Flugzeugs oder eines U-Bootes wirkt.

Zusätzlich läßt sich im Rammbohrgerät 1 noch eine Programmeinheit 14 anordnen, die einen vorgegebenen Bohrungsverlauf speichert. Wird diese Programmeinheit 14 mit der Steuervorrichtung 12 verbunden, so ist ein vorprogrammierter Bohrungsverlauf möglich, der laufend kontrolliert und korrigiert wird, indem die Werte des Meßwertumformers 10 und des Wegaufnehmers 11 ebenfalls als Korrekturwerte in die Steuervorrichtung 12 geleitet werden.

Die Steuervorrichtung 12 und die Programmeinheit 14 können auch im Anzeige- und Registriergerät 9 angeordnet sein und von dort aus Steuerleitungen zum Antrieb der Leitvorrichtung 13 in das Rammbohrgerät 1 verlaufen.

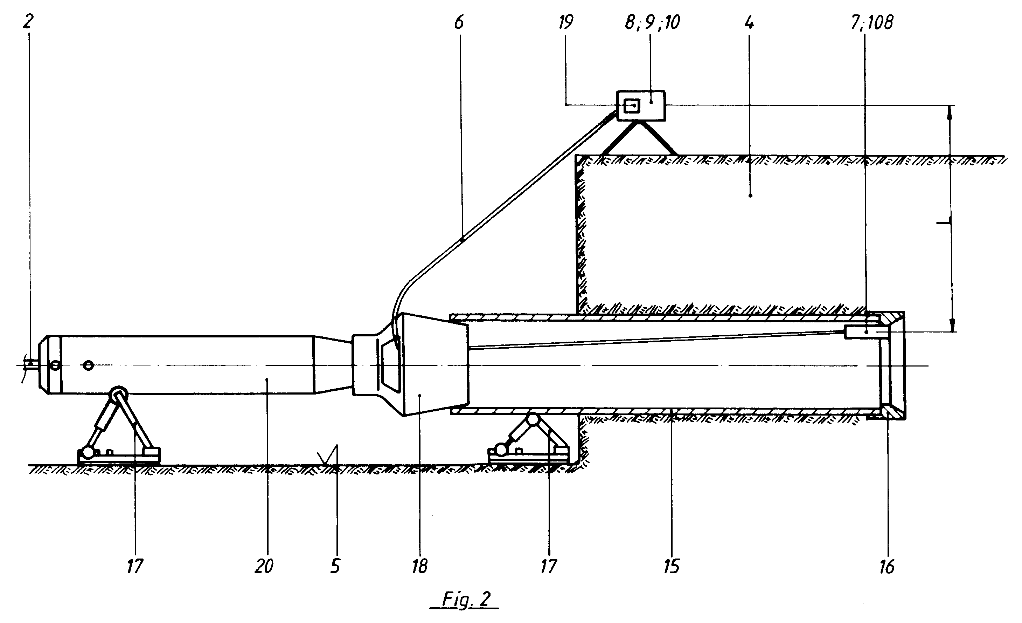

Im Ausführungsbeispiel gemäß Fig. 2 dient eine Ramme 20 dazu, ein Rohr 15 in das Erdreich 4 hineinzutreiben. Zu diesem Zweck ist auf das vordere Rohrende ein Rammschuh 16 aufgesetzt, und die Ramme 20 greift über ein Zwischenstück 18 am hinteren Rohrende an. Das Rohr 15 und die Ramme 20 ruhen auf einstellbaren Stützböcken 17, mit deren Hilfe sich das Rohr 15 und das Rammbohrgerät 1 vor Beginn des Eintreibens des Rohrs 15 genau ausrichten lassen. Der mit Flüssigkeit gefüllte Schlauch 6 bildet in diesem Falle ein offenes System, so daß sich der Druckaufnehmer 108 im Bereich des Rammschuhs 16 befindet, während im Anzeige- und Registriergerät 9 ein Ausgleichsgefäß 19 angeordnet ist. Bei Höhenabweichungen während des Rohrvortriebs, verändert sich der auf den Druckaufnehmer 108 wirkende statische Druck, der der Druckhöhe zwischen dem Ausgleichsgefäß 19 und dem Druckaufnehmer 108 entspricht. Dieser sich ändernde Druck wird durch den Druckaufnehmer 108 in elektrische Signale umgewandelt, die über eine im Schlauch 6 verlegte Leitung zum Anzeige- und Registriergerät 9 gelangen und dort verarbeitet werden. Bei Abweichungen vom vorgegebenen Weg des Rohres 15 lassen sich Richtungskonturen durch entsprechendes Ansetzen bzw. Ausrichten der Ramme 20 vor dem Einrammen eines neuen Rohres 15 vornehmen.

## Patentansprüche

1. Verfahren zum laufenden Messen der relativen Höhenlage eines sich im Erdreich bewegenden Erdverdrängungsgerätes, wie ein Rammbohrgerät oder ein Vortriebsrohr, dadurch gekennzeichnet, daß eine an sich bekannte, hydrostatische Druckunterschiede ermittelnde Meßvorrichtung zum Kontrollieren von Richtungsabweichungen des Erdverdrängungsgerätes verwendet wird und das eine Ende eines mit Flüssigkeit gefüllten Schlauchs außerhalb und oberhalb des Erdverdrängungsgeräts und das andere Ende vorne und dem Vortrieb des Erdverdrängungsgerätes folgend am Erdverdrängungsgerät angeordnet ist, wobei sich aufgrund des mit Flüssigkeit gefüllten, mit dem Erdverdrängungsgerät im Erdreich mitwandernden Schlauchs bei jeder Veränderung der relativen Höhenlage des Erdverdrängungsgerätes bezogen auf die Waagerechte eine entsprechende Veränderung der Höhe der den statischen Druck bestimmenden Flüssigkeitssäule im Schlauch und damit unmittelbar ein Maß für die relative Höhenlage des Erdverdrängungsgerätes ergibt.

2. Erdverdrängungsgerät mit einer Meßvorrichtung zur Durchführung des Verfahrens nach Anspruch 1, dadurch gekennzeichnet, daß das hintere, oberhalb des Erdverdrängungsgerätes (1, 15) angeordnete Ende des Schlauchs (6) mit einem Druckaufnehmer (8) verbunden ist und das vordere, vorne mit dem Erdverdrängungsgerät (1, 15) verbundene Ende des Schlauchs (6) eine gekapselte Ausgleichsmembran (7) aufweist, die Volumenveränderungen der Flüssigkeit und des Schlauchs aufgrund von Temperaturschwankungen ausgleicht und für ein geschlossenes Meßsystem sorgt, bei dem am Druckaufnehmer (8) statische Druckunterschiede auftreten, die ein Maß für die relative Höhenlage des Erdverdrängungsgerätes (1, 15) bezogen auf die Waagerechte sind.

3. Erdverdrängungsgerät mit einer Meßvorrichtung zur Durchführung des Verfahrens nach Anspruch 1, dadurch gekennzeichnet, daß das hintere, oberhalb des Erdverdrängungsgerätes (1, 15) angeordnete Ende des Schlauchs (6) und ein Volumenveränderungen der Flüssigkeit und des Schlauchs aufgrund von Temperaturschwankungen ausgleichender Flüssigkeitsvorratsbehälter (19) zu einem offenen Meßsystem verbunden sind und das vordere, vorne mit dem Erdverdrängungsgerät (1, 15) verbundene Ende einen Druckaufnehmer (108) aufweist, wobei sich bei auf die Waagerechte bezogenen relativen Höhenabweichungen während des Vortriebs des Erdverdrängungsgerätes (1, 15) der auf den Druckaufnehmer (108) wirkende statische Druck verändert, der der Druckhöhe zwischen dem Flüssigkeitsvorratsbehälter (19) und dem Druckaufnehmer (108) entspricht.

4. Erdverdrängungsgerät nach Anspruch 2 oder 3, gekennzeichnet durch einen mit dem die bei relativen Höhenabweichungen des Erdverdrängungsgerätes (1, 15) bewirkten statischen Druckveränderungen ermittelnden Druckaufnehmer (8, 108) verbundenen Meßumformer (10), der mit einem Anzeige- und Registriergerät (9) oberhalb des Erdverdrängungsgerätes (1, 15) angeordnet ist und den sich ändernden Druck in elektrische, eine direkte Anzeige von Höhenabweichungen im Registriergerät (9) erlaubende Signale umwandelt.

5. Erdverdrängungsgerät zum Herstellen von im wesentlichen waagerechten Erdbohrungen, das als Rammbohrgerät mit einer Meßvorrichtung zum laufenden Messen der relativen Höhenlage während des Vortriebs im Erdreich ausgebildet ist, gekennzeichnet durch einen mit einer Flüssigkeit gefüllten Schlauch (6), dessen vorderes Ende mit dem Rammbohrgerät (1) verbunden und dessen hinteres Ende außerhalb und oberhalb der Erdbohrung (3) angeordnet ist und einen Druckaufnehmer (8) aufweist, wobei sich bei auf die Waagerechte bezogenen relativen Höhenabweichungen des Rammbohrgerätes während des Vortriebs der auf den Druckaufnehmer (8) wirkende statische Druck verändert und direkt ein Maß für die relative Höhenlage der beiden Schlauchenden zueinander darstellt, und durch einen mit dem Druckaufnehmer (8) verbundenen Meßwertumformer (10), der den sich ändernden statischen Druck in elektrische, eine direkte Anzeige von Höhenabweichungen des Rammbohrgerätes (1) in einem oberhalb des Rammbohrgerätes (1) angeordneten Anzeige- und Registriergerät erlaubende Signale umwandelt, einen mit dem Schlauch (6) verbundenen, die Länge des in die Erdbohrung (3) gezogenen Schlauchs (6) und damit die von dem Rammbohrgerät (1) zurückgelegte Wegstrecke ermittelnden Wegaufnehmer (11) sowie eine mit dem Meßwertumformer (10) und dem Wegaufnehmer (11) verbundene, im Rammbohrgerät (1) angeordnete Steuervorrichtung (12) für die Winkellage des Rammbohrgerätes (1).

6. Erdverdrängungsgerät nach Anspruch 5, gekennzeichnet durch am Rammbohrgerät (1) angeordnete, mittels der Steuervorrichtung (12) verstellbare Leitvorrichtungen (13).

7. Erdverdrängungsgerät nach Anspruch 5 oder 6, gekennzeichnet durch eine mit der Steuervorrichtung (12) verbundene, einen vorgegebenen Bohrungsverlauf speichernde Programmeinheit (14).

## Claims

1. Method for continuously measuring the relative vertical position of an earth displacement device such as a percussion drill or a driven pipe as it moves in the ground, characterised in that a known hydrostatic device for determining pressure differences is used to monitor directional deviations of the earth displacement device and one end of a liquid filled hose is located outside and above the earth displacement device and the other end is located at the front of and following the advance of the earth displacement device, such that, because the liquid filled hose travels in the ground with the earth displacement device, there is, with every change in the relative vertical position of the earth displacement device with respect to the horizontal, a corresponding change in the height of the liquid column in the hose that determines the static pressure, and thus a direct measure of the relative vertical position of the earth displacement device.

2. An earth displacement device having a measuring device, for use in the method of claim 1, characterised in that the rear end of the hose (6), located above the earth displacement device (1, 15), is connected to a pressure sensor (8) and the forward end of the hose (6), connected to the earth displacement device (1, 15) at the front, is fitted with an encapsulated compensating membrane (7) that compensates for changes in volume of the liquid and of the hose arising from temperature variations and provides a closed system, such that static pressure differences arise at the pressure sensor (8) that are a measure of the relative vertical position of the earth displacement device (1, 15) with respect to the horizontal.

3. An earth displacement device having a measuring device, for use in the method of claim 1, characterised in that the rear end of the hose (6), located above the earth displacement device (1, 15), and a liquid reservoir (19) compensating for changes in volume of the liquid and of the hose arising from temperature changes, are connected to form an open system and the forward end, connected to the earth displacement device (1, 15) at the front, is fitted with a pressure sensor (108), such that in the event of relative deviations in altitude with respect to the horizontal during the forward drive of the earth displacement device (1, 15) the static pressure acting on the pressure sensor (108), which corresponds to the magnitude of the pressure between the liquid reservoir (19) and the pressure sensor (108), changes.

4. An earth displacement device according to claim 2 or claim 3, characterised by a transducer (10), connected to the pressure sensor (8, 108) that detects the static pressure changes caused when relative deviations in altitude of the earth displacement device (1, 15) occur, which is located with an indicating and recording instrument (9) above the earth displacement device (1, 15) and converts the changing pressure into electrical signals permitting a direct indication of altitude deviations in the recording instrument (9).

5. An earth displacement device for the production of substantially horizontal underground bores, in the form of a percussion drill having a measuring device for continuous measurement of the relative vertical position as it drives forward in the ground, characterised by a liquid filled hose (6) of which the forward end is connected to the percussion drill (1) and the rear end is located outside and above the underground bore (3) and is provided with a pressure sensor (8), such that in the event of relative deviations in the altitude of the percussion drill with respect to the horizontal during the advance the static pressure acting on the pressure sensor (8) changes and represents a direct measure of the vertical position of the two ends of the hose relative to one another, and by a transducer (10) that is connected to the pressure sensor (8) and converts the varying static pressure into electrical signals that allow of a direct indication of altitude deviations of the percussion drill (1) in an indicating and recording instrument located above the percussion drill (1), and a displacement sensor (11) connected to the hose (6) to detect the length of the hose (6) drawn into the bore (3) and thus the distance travelled by the percussion drill (1), and a control device (12), connected to the transducer (10) and the displacement sensor (11), for controlling the angular position of the percussion drill (1).

6. An earth displacement device according to claim 5, characterised by steering devices (13) fitted on the earth displacement device (1) and controlled by the control device (12).

7. An earth displacement device according to claim 5 or claim 6, characterised by a program unit (14) connected to the control device (12) for storing a predetermined course for the bore.

## Revendications

1. Procédé pour la mesure en continu de la hauteur relative d'un appareil de déplacement de terre se déplaçant dans la terre, tel qu'un appareil de forage par pieu ou un tube de creusement, caractérisé en ce qu'on utilise un appareil de mesure connu en soi qui détermine des différences de pression hydrostatique pour contrôler les déviations de la direction de l'appareil de déplacement de terre et en ce qu'une extrémité d'un tuyau rempli de liquide est disposée à l'extérieur et au-dessus de l'appareil de déplacement de terre et en ce que l'autre extrémité est disposée à l'avant et suit le creusement de l'appareil de déplacement de terre, le tuyau rempli de liquide avançant dans la terre avec l'appareil de déplacement de terre et provoquant à chaque modification de la hauteur relative de l'appareil de déplacement de terre par rapport à l'horizontale une modification correspondante de la hauteur de la colonne de liquide déterminant la pression hydrostatique dans le tuyau et résultant ainsi directement en une mesure de la hauteur relative de l'appareil de déplacement de terre.

2. Appareil de déplacement de terre comprenant un dispositif de mesure pour la réalisation du procédé selon la revendication 1, caractérisé en ce que l'extrémité postérieure du tuyau (6) disposée au-dessus de l'appareil de déplacement de terre (1, 15) est reliée à un capteur de pression (8) et en ce que l'extrémité antérieure du tuyau (6) reliée à l'avant de l'appareil de déplacement de terre (1, 15) présente une membrane de compensation (7) blindée qui compense les variations de volume du liquide et du tuyau provoquées par des variations de température et qui forme un système de mesure fermé faisant apparaître des différences de pression statique sur le capteur de pression (8) qui représentent une mesure de la hauteur relative de l'appareil de déplacement de terre (1, 15) par rapport à l'horizontale.

3. Appareil de déplacement de terre comprenant un dispositif de mesure pour la réalisation du procédé selon la revendication 1, caractérisé en ce que l'extrémité postérieure du tuyau (6), disposée au-dessus de l'appareil de déplacement de terre (1, 15), et un réservoir de liquide (19), compensant les modifications de volume du liquide et du tuyau dues aux variations de la température, sont reliés à un système de mesure ouvert et en ce que l'extrémité antérieure. reliée à l'avant de l'appareil de déplacement de terre (1, 15), présente un capteur de pression (108), la pression statique agissant sur le capteur de pression (108) se modifiant lors de variations de la hauteur relative par rapport à l'horizontale pendant le creusement de l'appareil de déplacement de terre (1, 15) et correspondant à la pression manométrique entre le réservoir de liquide (19) et le capteur de pression (108).

4. Appareil de déplacement de terre selon la revendication 2 ou 3, caractérisé en ce qu'un transformateur de mesures (10), relié à un capteur de pression (8, 108) qui détermine les variations de pression statique provoquées par des déviations de la hauteur relative de l'appareil de déplacement de terre (1, 15), est disposé avec un appareil d'indication et d'enregistrement (9) au-dessus de l'appareil de déplacement de terre (1, 15) et transforme la variation de la pression en signaux électriques permettant une indication directe des déviations de la hauteur dans l'appareil d'enregistrement (9).

5. Appareil de déplacement de terre pour la réalisation de forages de terre essentiellement horizontaux, ayant la forme d'un appareil de forage par pieu comprenant un dispositif de mesure pour la mesure en continu de la hauteur relative pendant le creusement dans la terre, caractérisé par un tuyau (6) rempli d'un liquide dont l'extrémité antérieure est reliée à l'appareil de forage par pieu (1) et dont l'extrémité postérieure est disposée à l'extérieur et au-dessus du trou de forage (3) et présente un capteur de pression (8), les déviations de la hauteur relative par rapport à l'horizontale de l'appareil de forage par pieu pendant le creusement modifiant la pression statique agissant sur le capteur de pression (8) et représentant une mesure directe de la hauteur relative des deux extrémités du tuyau, et par un transformateur de mesures (10) relié au capteur de pression (8) qui transforme la pression statique qui varie en signaux électriques, permettant une indication directe des déviations de hauteur de l'appareil de forage par pieu (1) dans un appareil d'indication et d'enregistrement disposé au-dessus de l'appareil de forage par pieu (1), par un capteur de déplacement (11) relié au tuyau (6), déterminant la longueur du tuyau introduit dans le trou de forage (3) et donc le déplacement effectué par l'appareil de forage par pieu (1) ainsi que par un dispositif de réglage (12) relié au transformateur de mesures (10) et au capteur de déplacement (11), disposé dans l'appareil de forage par pieu (1) pour la position angulaire de l'appareil de forage par pieu (1).

6. Appareil de déplacement de terre selon la revendication 5, caractérisé par des dispositifs de guidage (13) disposés sur l'appareil de forage par pieu (1) et pouvant être réglés par le dispositif de réglage (12).

7. Appareil de déplacement de terre selon la revendication 5 ou 6, caractérisé par une unité de programmation (14) reliée au dispositif de réglage (12), ayant en mémoire un processus de forage défini.
